# FASCICULE DE BREVET EUROPEEN

(11) **EP 3 198 123 B1**
(45) Date de publication et mention de la délivrance du brevet: **12.09.2018**
(21) Numéro de dépôt: 15788464.4
(22) Date de dépôt: 17.09.2015
(51) Int. Cl.: B23K 37/053, B23P 19/10, F01N 13/18

(54) **PROCÉDÉ DE FABRICATION INDIVIDUEL D'UN SOUS-ENSEMBLE D'ÉLÉMENTS DE LIGNE D'ÉCHAPPEMENT AU MOYEN D'UN GABARIT**
INDIVIDUELLES HERSTELLUNGSVERFAHREN FÜR TEILMONTIERTE ELEMENTE EINER ABGASANLAGE MIT HILFE EINER MONTAGELEHRE
INDIVIDUAL FABRICATION PROCESS OF ELEMENT SUB-ASSEMBLY OF EXHAUST GAS LINE WITH HELP OF MOUNTING JIG

(30) Priorité: 25.09.2014 FR 1459070
(43) Date de publication de la demande: 02.08.2017
(73) Titulaire: Renault S.A.S., 92100 Boulogne-Billancourt (FR)
(72) Inventeur: GUEROULT, Julien, F-76620 Le Havre (FR); MILON, Charles, F-76600 Le Havre (FR)
(86) Numéro de dépôt international: PCT/FR2015/052489
(87) Numéro de publication internationale: WO 2016/046472

(56) Documents cités:
- EP-A1- 0 271 393
- DE-B4- 19 549 751
- DE-T2- 69 820 085

## Description

### DOMAINE TECHNIQUE DE L'INVENTION

La présente invention concerne un procédé de fabrication individuel d'un sous-ensemble d'éléments d'une ligne d'échappement de véhicule automobile sur une station de fabrication.

### ARRIERE PLAN TECHNIQUE DE L'INVENTION

L'invention concerne plus particulièrement un procédé de fabrication individuel d'un sous-ensemble d'éléments d'une ligne d'échappement de véhicule automobile sur une station de fabrication, le sous-ensemble étant destiné à être raccordé à d'autres éléments pour former un ensemble de la ligne d'échappement, au moins un élément complémentaire de l'ensemble ne faisant pas partie dudit sous-ensemble, dans un premier mode d'utilisation dit "complet" de la station de fabrication, tous les éléments de l'ensemble sont livrés préassemblés sur la station de fabrication, au moins un élément complémentaire, dit élément de référence, formant une référence géométrique permettant à des moyens de positionnement de la station de positionner l'ensemble par rapport à des outils de la station.

Généralement, une ligne d'échappement de véhicule automobile comporte plusieurs éléments qui sont raccordés pour former un ensemble. Un tel ensemble forme par exemple un tronçon de la ligne d'échappement du véhicule automobile. Cet ensemble comporte un conduit de guidage des gaz d'échappement depuis un orifice d'entrée jusqu'à un orifice de sortie.

Les différents éléments de cet ensemble sont fixés par soudage sur une station de fabrication, ici une station de soudage. Une telle station de fabrication est utilisée dans un processus de fabrication à la chaîne. Elle est équipée d'outils, ici de soudage, portés par des bras robotisés qui permettent de fixer rapidement et automatiquement les éléments ensemble.

Un tel ensemble de ligne d'échappement comporte plusieurs éléments dont les plus simples se présentent sous la forme de conduites tubulaires.

Les lignes d'échappement modernes comportent en outre plusieurs organes ayant des fonctions spécifiques. Par exemple, certains éléments sont équipés d'organes de traitement des gaz d'échappement, par exemple des filtres à particules. Selon un autre exemple, dans les véhicules actuels, il est connu de mélanger l'air d'admission avec des gaz d'échappement pour diminuer la production d'éléments polluants lors de la combustion. A cet effet, un élément comporte un organe de recirculation formé par une vanne qui est destinée à dévier une partie des gaz d'échappement dans un circuit de recirculation.

Un tel ensemble de ligne d'échappement présente le plus souvent des coudes pour adapter la géométrie de l'ensemble de ligne d'échappement à la configuration du véhicule.

En outre, certains organes de la ligne d'échappement présentent une forme asymétrique par rapport à l'axe d'écoulement des gaz dans le conduit.

Du fait de cette géométrie particulière et de la forme asymétrique de chaque organe, l'ensemble de ligne d'échappement doit être positionné très précisément dans la station de fabrication pour permettre un soudage précis des divers éléments entre eux.

A cet effet, la station de fabrication est équipée de moyens de positionnement, par exemple des moyens de mise en géométrie de l'ensemble. Ces moyens de positionnement utilisent certains éléments comme des références géométriques. Ainsi, les outils de fixation peuvent être commandés automatiquement pour souder en série chaque ensemble sans intervention d'un opérateur.

Par ailleurs, certains sous-ensembles de la ligne d'échappement sont conçus pour être remplacés individuellement dans la ligne d'échappement d'un véhicule usagé, par exemple à la suite d'une usure normale ou à la suite d'un accident du véhicule. Pour cette raison, ces sous-ensembles doivent pouvoir être produits individuellement à la chaîne pour être livrés individuellement en tant que pièces de rechange.

Néanmoins, la production de sous-ensemble ne peut pas être réalisée directement sur la station de fabrication utilisée pour fabriquer l'ensemble de ligne d'échappement. En effet, le sous-ensemble ne comporte généralement pas tous les éléments de référence utilisés pour positionner correctement le sous-ensemble sur les moyens de positionnement de la station de fabrication. Il faut donc concevoir de nouveaux moyens de positionnement qui sont adaptés audit sous-ensemble.

Cependant, une telle conception est onéreuse et prend beaucoup de temps.

On a aussi proposé de modifier les moyens de positionnement existant pour les adapter au sous-ensemble à produire.

Mais à nouveau, une telle conception est onéreuse et prend beaucoup de temps. De plus, il faut prévoir des moyens de positionnement pour chaque sous-ensemble susceptible d'être produit.

De telles solutions sont d'autant moins rentables que très peu de sous-ensembles sont fabriqués individuellement pour former des pièces de rechange par rapport au nombre d'ensembles fabriqués en série.

Une telle station de fabrication est utilisée dans un processus de fabrication à la chaîne. Elle est équipée d'outils, ici de soudage, portés par des bras robotisés qui permettent de fixer rapidement et automatiquement les éléments ensemble.

Un tel ensemble de ligne d'échappement comporte plusieurs éléments dont les plus simples se présentent sous la forme de conduites tubulaires.

Les lignes d'échappement modernes comportent en outre plusieurs organes ayant des fonctions spécifiques. Par exemple, certains éléments sont équipés d'organes de traitement des gaz d'échappement, par exemple des filtres à particules. Selon un autre exemple, dans les véhicules actuels, il est connu de mélanger l'air d'admission avec des gaz d'échappement pour diminuer la production d'éléments polluants lors de la combustion. A cet effet, un élément comporte un organe de recirculation formé par une vanne qui est destinée à dévier une partie des gaz d'échappement dans un circuit de recirculation.

Un tel ensemble de ligne d'échappement présente le plus souvent des coudes pour adapter la géométrie de l'ensemble de ligne d'échappement à la configuration du véhicule.

En outre, certains organes de la ligne d'échappement présentent une forme asymétrique par rapport à l'axe d'écoulement des gaz dans le conduit.

Du fait de cette géométrie particulière et de la forme asymétrique de chaque organe, l'ensemble de ligne d'échappement doit être positionné très précisément dans la station de fabrication pour permettre un soudage précis des divers éléments entre eux.

A cet effet, la station de fabrication est équipée de moyens de positionnement, par exemple des moyens de mise en géométrie de l'ensemble. Ces moyens de positionnement utilisent certains éléments comme des références géométriques. Ainsi, les outils de fixation peuvent être commandés automatiquement pour souder en série chaque ensemble sans intervention d'un opérateur.

Le document DE19549751 divulgue un procédé et une station de montage pour l'assemblage et le soudage de système d'échappement pour véhicule, dans lequel la totalité de plusieurs sous-ensembles, est livrée préassemblé à la station de fabrication, dans un mode d'utilisation "complet".

### BREF RESUME DE L'INVENTION

La présente invention propose un procédé du type décrit précédemment, permettant de réutiliser la station de fabrication sans modification majeure, caractérisé en ce que, dans un deuxième mode d'utilisation dit "partiel" de la station de fabrication, seul le sous-ensemble est livré préassemblé à la station de fabrication, au moins un gabarit étant préalablement monté sur le sous-ensemble préassemblé pour remplacer au moins les éléments complémentaire de référence manquant au sous-ensemble afin de permettre le positionnement correct du sous-ensemble sur la station de traitement sans modifier les moyens de positionnement de ladite station par rapport au mode d'utilisation "complet".

Selon d'autres caractéristiques du procédé :
- le gabarit est formé par un assemblage de composants fixés ensembles, tous les éléments complémentaires manquants étant remplacés par des composants de forme extérieure identique ;
- chaque gabarit est réutilisable pour la fabrication de plusieurs sous-ensembles identiques.

L'invention concerne aussi un gabarit pour la mise en oeuvre du procédé réalisé selon les enseignements de l'invention, caractérisé en ce qu'il comporte au moins un composant qui est identique à l'élément dit "de série" utilisé pour fabriquer un ensemble de ligne d'échappement dans le mode d'utilisation "complet" de la station.

Selon d'autres caractéristiques du gabarit :
- le gabarit comporte au moins un composant dit "renforcé" qui présente une forme extérieure identique à l'élément correspondant utilisé sur l'ensemble de ligne d'échappement, mais qui présente une structure interne plus rigide ;
- un élément complémentaire de l'ensemble est formé par une conduite tubulaire, cette conduite tubulaire étant remplacée par un composant formé par une conduite tubulaire de paroi plus épaisse dans le gabarit ;
- le gabarit est destiné à être fixé par emboîtement axial d'une extrémité de raccordement du gabarit avec un conduit d'extrémité du sous-ensemble ;
- le gabarit est équipé d'un tenon qui est agencé à son extrémité axiale de raccordement, le tenon étant destiné à être emboîté de manière démontable avec un ajustement serré dans le conduit d'extrémité du sous-ensemble ;
- le tenon comporte une partie de fixation avec l'extrémité de raccordement du gabarit ;
- la partie de fixation est formée par un manchon dans lequel l'extrémité de raccordement du gabarit est insérée et fixée ;
- la partie de fixation est formée par une cheville qui est emmanchée à force dans un orifice axial de l'extrémité de raccordement du gabarit.

L'invention concerne aussi une station de fabrication d'au moins un sous-ensemble d'éléments d'une ligne d'échappement de véhicule automobile comprenant des outils pour fabriquer ladite ligne d'échappement et au moins un gabarit.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un premier exemple d'un ensemble d'éléments faisant partie d'une ligne d'échappement ;
- la figure 2 est une vue en perspective qui représente un ensemble d'éléments positionné dans une station de fabrication par des moyens de positionnement ;
- la figure 3 est une vue en perspective éclatée qui représente un sous-ensemble de l'ensemble de la figure 1 ainsi qu'un gabarit réalisé selon les enseignements de l'invention ;
- la figure 4 est une vue en coupe axiale qui représente un tenon de fixation temporaire du gabarit de la figure 3 sur le sous-ensemble, le tenon étant réalisé selon un premier mode de réalisation de l'invention ;
- la figure 5 est une vue en perspective qui représente un tenon de fixation temporaire du gabarit de la figure 3 sur le sous-ensemble, le tenon étant réalisé selon un deuxième mode de réalisation de l'invention ;
- la figure 6 est une vue similaire à celle de la figure 1 qui représente un deuxième exemple d'un ensemble d'éléments de tuyauterie ;
- la figure 7 est une vue similaire à celle de la figure 3 qui représente un sous-ensemble de l'ensemble de la figure 6 ainsi que deux gabarits réalisés selon les enseignements de l'invention.

### DESCRIPTION DETAILLEE DES FIGURES

Dans la suite de la description, des éléments présentant une structure identique ou des fonctions analogues seront désignés par une même référence.

Dans la suite de la description on adoptera une orientation axiale dirigée localement selon l'axe de chaque élément depuis l'amont vers l'aval, selon le sens d'écoulement des gaz d'échappement destinés à être évacués par la ligne d'échappement.

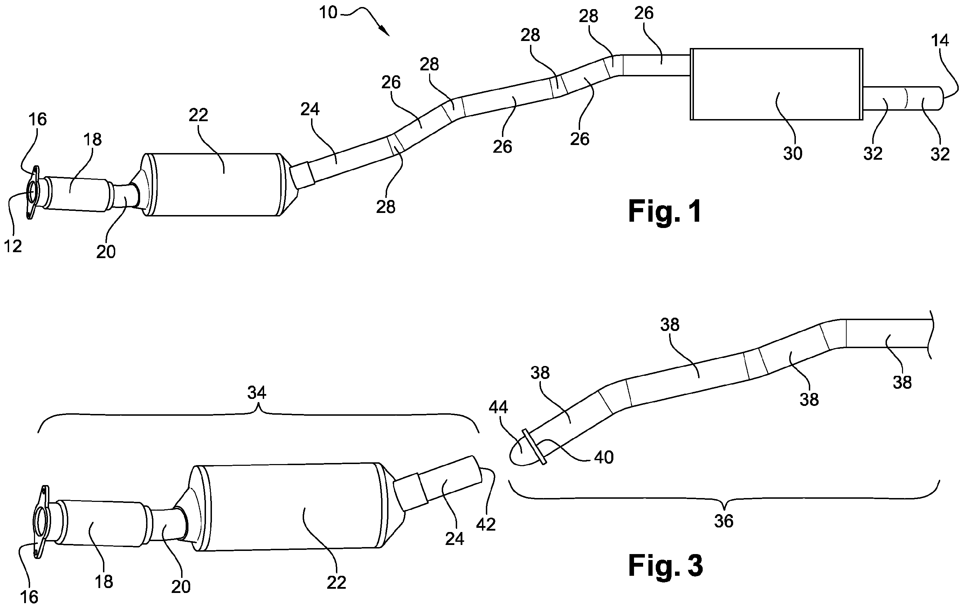

On a représenté à la figure 1 un ensemble 10 d'éléments pour une ligne d'échappement (non représentée) de véhicule automobile.

Cet ensemble 10 comporte un conduit d'échappement délimité par une première extrémité 12 amont et par une deuxième extrémité 14 aval. L'ensemble 10 est constitué par un assemblage d'éléments qui vont à présent être décrits d'amont en aval.

Un premier élément est formé par une bride 16 de fixation, par exemple sur un collecteur d'échappement (non représenté). Cette bride 16 est montée à une extrémité amont d'un deuxième élément formé par un tronçon 18 flexible. Le tronçon 18 flexible est lui-même raccordé à un troisième élément formé par une conduite 20 rigide d'entrée. La conduite 20 d'entrée alimente un quatrième élément qui est formé par un organe de dépollution, ici un filtre 22 à particules. Puis une sortie du filtre 22 à particules est raccordée à un cinquième élément formé par une conduite 24 rigide de sortie.

La conduite 24 de sortie est raccordée à une série de plusieurs éléments formés par des conduites 26 tubulaires rigides, dites conduites 26 intermédiaires par la suite. Ces conduites tubulaires 26 intermédiaires forment entre elles des coudes 28 d'inclinaison déterminées. Chaque coude 28 s'étend ici dans un plan qui peut être différent des autres coudes 28. Une extrémité aval de la série de conduites 26 tubulaires intermédiaires est raccordée à un orifice d'entrée d'un élément formé par un silencieux 30 d'échappement. Un orifice de sortie du silencieux 30 est raccordé à des éléments formés par une dernière série de conduites 32 tubulaires finales qui débouchent par l'orifice 14 aval du conduit d'échappement.

Tous ces éléments sont ici raccordés en série les uns aux autres pour former un unique conduit d'échappement.

Durant sa production, un tel ensemble est livré préassemblé sur une station de fabrication, par exemple sur une station de soudage. Cette station de soudage comporte au moins un outil (non représenté), ici un outil de soudage. L'outil de soudage est porté par un bras robotisé (non représenté) qui est piloté automatiquement par un programme de soudage adapté à la géométrie de l'ensemble 10. Pour que le soudage automatisé soit suffisamment précis, il est préférable que l'ensemble 10 à souder soit positionné très précisément.

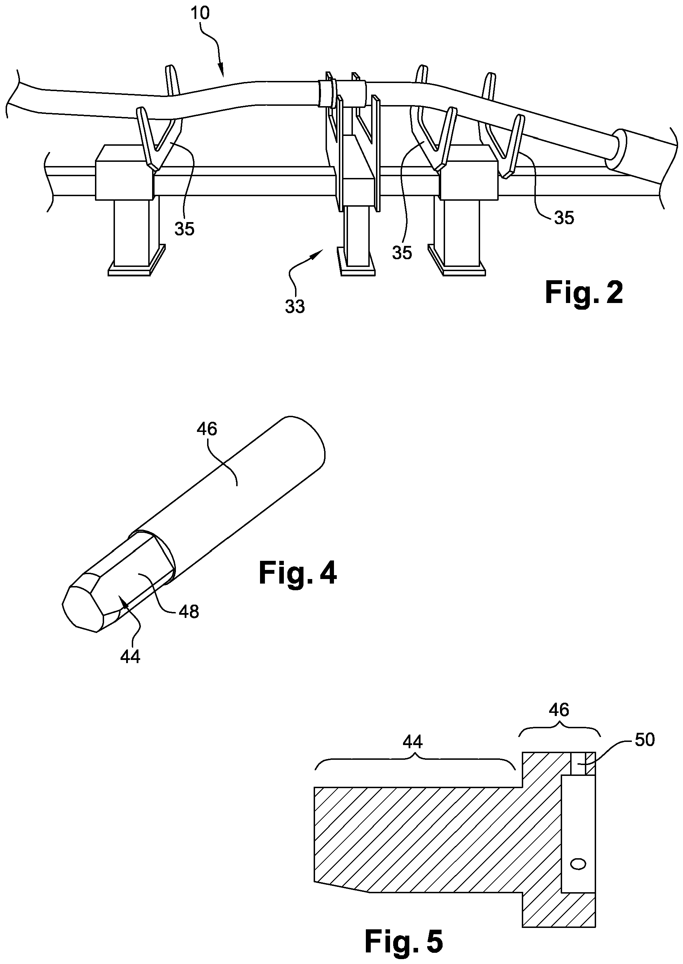

A cet effet, la station de soudage comporte des moyens 33 de positionnement de l'ensemble 10, comme illustré à la figure 2. Ces moyens de positionnement utilisent certains éléments, dit éléments de référence, comme une référence géométrique permettant de positionner et d'orienter l'ensemble 10 de manière précise par rapport à l'outil de soudage. De tels moyens de positionnement sont conçus spécifiquement pour la configuration de l'ensemble 10.

Les moyens de positionnement sont par exemple formés par des supports fixes équipés de moyens 35 de préhension des éléments de référence.

La station de fabrication peut ainsi être utilisée dans un mode de fonctionnement dit "complet" pour souder automatiquement tous les éléments de l'ensemble 10 les uns aux autres.

Par ailleurs, pour la fabrication de pièces de rechange, il arrive que l'on ne doive fabriquer qu'un sous-ensemble 34 de cet ensemble 10. Par exemple, en cas de défaillance du filtre 22 à particules, on ne changera pas tout l'ensemble 10. Comme représenté à la figure 3, on ne remplacera qu'un sous-ensemble 34 formé par la bride 16 de fixation, le tronçon 18 flexible, la conduite 20 rigide d'entrée, le filtre 22 à particules et la conduite 24 rigide de sortie.

Il est avantageux de pouvoir réaliser la fixation des éléments de ce sous-ensemble 34 au moyen de ladite station de soudage dans un mode dit "de fonctionnement partiel" en utilisant les même moyens 33 de positionnement que l'ensemble 10.

Cependant, l'ensemble 10 comporte des éléments, dits "éléments complémentaires", ne faisant pas partie du sous-ensemble 34. Dans l'exemple représenté à la figure 3, les éléments complémentaires sont formés par les conduites 26 rigides aval et leurs coudes 28, par le silencieux 30 et par la dernière série de conduites 32.

Or, certains de ces éléments complémentaires forment aussi des éléments de référence pour les moyens de positionnement de la station de soudage. Il en résulte que le sous-ensemble 34 ne peut pas être positionné correctement sur les moyens 33 de positionnement. Dans l'exemple représenté à la figure 1, les éléments complémentaires de référence sont ici formés par les conduites 26 rigides intermédiaires.

L'invention propose de livrer le sous-ensemble 34 préassemblé à la station de fabrication, au moins un gabarit 36 étant préalablement monté sur le sous-ensemble 34 préassemblé pour remplacer au moins les éléments complémentaire de référence manquant au sous-ensemble 34 afin de permettre le positionnement correct du sous-ensemble 34 sur la station de fabrication sans modifier les moyens 33 de positionnement de ladite station 34 par rapport à son mode de fonctionnement "complet".

Le bras robotisé est alors commandé par un programme adapté à la fixation des éléments du sous-ensemble 34. Ainsi, le bras robotisé ne réalise pas les opérations de soudure des éléments complémentaires remplacés par le gabarit 36.

Comme représenté à la figure 3, les éléments complémentaires de référence sont remplacés par un gabarit 36 formé de composants de forme extérieure identique aux éléments complémentaires de référence correspondant.

Dans l'exemple de la figure 2, le sous-ensembles 34 est un tronçon d'extrémité amont de l'ensemble 10. Un seul gabarit 36 est utilisé pour remplacer la partie aval manquante pour permettre le positionnement du sous-ensemble 34.

Le gabarit 36 est réutilisable pour la fabrication de plusieurs sous-ensembles 34 identiques.

Le gabarit 36 est réalisé par un assemblage de composants dont la forme extérieure correspond à celle des éléments originaux qu'ils remplacent. Lesdits composants sont fixés les uns aux autres préalablement à l'utilisation du gabarit 36. Ainsi le gabarit 36 est manipulable comme un unique élément qui est rapidement et aisément monté sur le sous-ensemble 34.

Cependant, certains éléments remplacés par des composants du gabarit 36 sont fragiles et risquent d'être endommagés lors des multiples manipulations. A cet effet, ces éléments fragiles sont remplacés sur le gabarit 36 par des composants dit "renforcés". Ces composants renforcés présentent une forme extérieure identique à l'élément correspondant utilisé sur l'ensemble 10 de ligne d'échappement, mais ce composant renforcé présente une structure interne différente.

Dans l'exemple représenté à la figure 3, chaque composant 38 de gabarit correspond à une conduite 26 tubulaire intermédiaire. Chaque composant 38 est réalisé par une conduite tubulaire de paroi plus épaisse que la conduite 26 tubulaire intermédiaire correspondante de l'ensemble 10. Ainsi, le gabarit 36 peut être manipulé avec un risque réduit de déformation des composants 38 le constituant.

Selon une variante non représentée de l'invention, d'autres éléments moins fragiles et plus compliqués à reproduire sont remplacés par des composants identiques sur le gabarit 36. Au moins un composant du gabarit 36 est ainsi formé par un élément dit "de série" qui est identique à celui utilisé pour fabriquer l'ensemble 10 de ligne d'échappement correspondant. Par exemple, une vanne de recirculation des gaz d'échappement présente sur l'ensemble 10 original pourra être reproduite par un élément de série dans le gabarit 36 monté sur le sous-ensemble 34.

Le gabarit 36 est destiné à être fixé par emboîtement axial d'une extrémité 40 libre de raccordement du gabarit 36 dans un conduit 42 d'extrémité libre du sous-ensemble 34. A cet effet, l'extrémité libre de raccordement du gabarit 34 est équipée d'un tenon 44 axial qui est agencé à son extrémité 40 de raccordement. Le tenon 44 est destiné à être emboîté de manière démontable avec un ajustement serré dans le conduit d'extrémité du sous-ensemble 34 pour permettre sa fixation temporaire le temps de souder les éléments du sous-ensemble 34 entre eux.

Le tenon 44 est conçu pour que le gabarit 36 soit monté sur le sous-ensemble 34 de manière suffisamment précise pour que le gabarit permette un positionnement optimal du sous-ensemble 34 sur les moyens 33 de positionnement.

Le tenon 44 comporte une partie 46 de fixation avec l'extrémité 40 de raccordement du gabarit 36.

Selon un premier mode de réalisation qui est représenté à la figure 4, la partie 46 de fixation du tenon 44 est formée par une cheville axiale qui est fixée à l'extrémité 40 de raccordement du gabarit 36 par emmanchement à force. A cet effet, l'extrémité 40 de raccordement du gabarit 36 est équipée d'un orifice axial (non représenté qui reçoit la cheville 46. La cheville 46 présente ici une forme cylindrique axiale qui est prolongée axialement par le tenon 44 de manière que le tenon 44 fasse saillie axialement par rapport au gabarit 36 après emmanchement de la cheville 46.

Le tenon 44 présente une extrémité axiale libre de forme globalement conique pour faciliter son insertion axiale dans l'orifice d'extrémité du sous-ensemble 34. Le tenon 44 présente une dimension radiale suffisante pour permettre au gabarit 36 d'être maintenu fixé au sous-ensemble 34 par frottement entre le tenon 44 et une paroi interne du conduit lors de l'opération de soudage dans la station de soudage. Cependant, la dimension radiale du tenon 44 permet un démontage du gabarit 36 suffisamment facile à l'issue de l'opération de soudage pour ne pas endommager le sous-ensemble 34.

Cet effet est par exemple obtenu en munissant le tenon 44 de méplats 48 qui diminuent la surface de frottement entre le tenon 44 et la paroi interne du conduit du sous-ensemble.

Selon un deuxième mode de réalisation de l'invention qui est représenté à la figure 5, la partie 46 de fixation du tenon 44 est formée par un manchon qui est destiné à être emboîté avec l'extrémité 40 de raccordement du gabarit 36. Pour permettre une fixation solide entre le gabarit 36 et le manchon 46, il est prévu un taraudage 50 traversant radialement une paroi cylindrique du manchon 46. Une vis de serrage est destinée à être vissée dans ce taraudage 50 pour assurer la fixation du manchon 46 avec le gabarit 36 par serrage de la vis contre une paroi du gabarit 36, ou par insertion d'une extrémité de la vis dans un orifice correspondant du gabarit 36.

Lors de la réalisation d'un sous-ensemble 34, les éléments constituant le sous-ensemble 34 sont assemblés par emboîtement. Puis le gabarit 36 est fixé temporairement au sous-ensemble 34 par emboîtement démontable du tenon 44 dans l'orifice d'extrémité du sous-ensemble 34.

Le module formé par le sous-ensemble 34 et le gabarit 36 est alors positionné sur les moyens 33 de positionnement de la station de soudage. Le bras de soudage est ensuite piloté pour souder les éléments du sous-ensemble 34 entre eux au moyen d'un programme de pilotage idoine.

A l'issue de l'opération de soudage, le sous-ensemble 34 et le gabarit 36 sont retirés des moyens 33 de positionnement, puis le gabarit 36 est ôté, par déboîtement, du sous-ensemble 34 ainsi fixé.

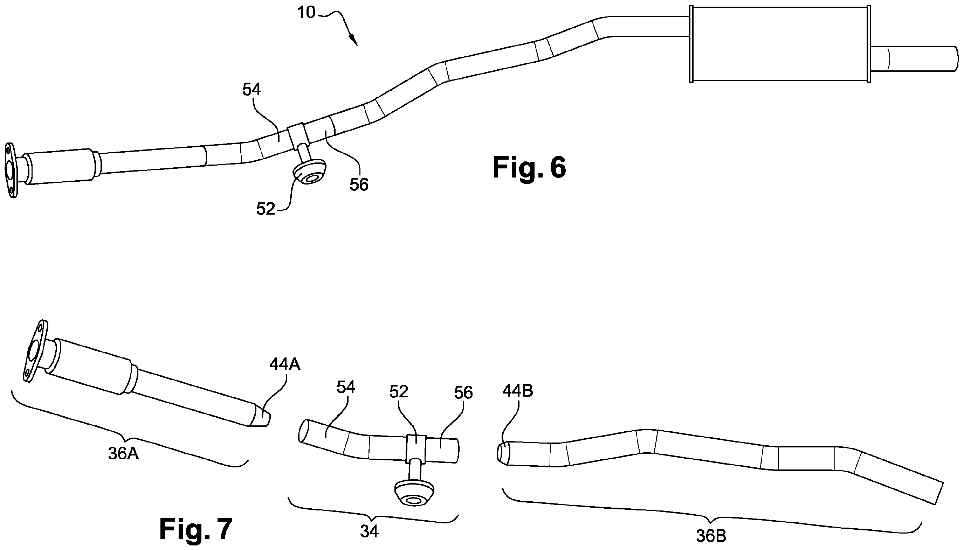

Selon une variante de l'invention qui est représentée à la figure 6, l'ensemble 10 ne comporte pas de filtre à particules, mais une vanne 52 de recirculation des gaz d'échappement qui est agencée sur une portion intermédiaire de l'ensemble 10. La vanne 52 de recirculation est raccordée à une conduite 54 amont, d'une part, et à une conduite 56 aval, d'autre part.

La situation intermédiaire du sous-ensemble 34 comportant la conduite 54 amont, la vanne 52 de recirculation et la conduite 56 aval requiert l'utilisation de deux gabarits 36A, 36B. Un gabarit 36A amont est raccordé à une extrémité libre amont du sous-ensemble 34 par l'intermédiaire d'un tenon 44A, tandis qu'un gabarit 36B aval est raccordé à une extrémité aval libre du sous-ensemble 34 par l'intermédiaire d'un tenon 44B.

Dans cet exemple, le gabarit 36A amont est par exemple constitué d'un assemblage de composants identiques aux éléments de série de l'ensemble 10 d'origine, tandis que le gabarit 36B aval est constitué d'un assemblage de composants "renforcés".

Le procédé réalisé selon les enseignements de l'invention permet ainsi de fabriquer des sous-ensemble 34 avec les mêmes moyens de production que l'ensemble 10 complet.

En outre, les gabarits 36, 36A, 36B utilisés pour mettre en oeuvre ce procédé sont avantageusement fabriqués à partir d'éléments de série pour en diminuer le coût de fabrication.

En outre, certains composants du gabarit sont formés d'éléments "renforcés" pour permettre leur usage répété lors de la fabrication en série de sous-ensembles 34 par réutilisation du même gabarit.

De plus, les mêmes moyens de positionnement sont utilisés pour la production d'ensembles complets et pour la production individuelle de sous-ensembles. En évitant la fabrication de moyens de positionnement spécifiques pour chaque sous-ensemble, on gagne en espace de stockage du matériel et en temps d'entretien du matériel.

## Revendications

1. Procédé de fabrication individuel d'un sous-ensemble (34) d'éléments d'une ligne d'échappement de véhicule automobile sur une station de fabrication, le sous-ensemble (34) étant destiné à être raccordé à d'autres éléments pour former un ensemble (10) de la ligne d'échappement, au moins un élément complémentaire de l'ensemble (10) ne faisant pas partie dudit sous-ensemble (34),
dans un premier mode d'utilisation dit "complet" de la station de fabrication, tous les éléments de l'ensemble (10) sont livrés préassemblés sur la station de fabrication, au moins un élément complémentaire, dit élément de référence, formant une référence géométrique permettant à des moyens (33) de positionnement de la station de positionner l'ensemble (10) par rapport à des outils de la station,
dans un deuxième mode d'utilisation dit "partiel" de la station de fabrication, seul le sous-ensemble (34) est livré préassemblé à la station de fabrication, **caractérisé en ce qu'**au moins un gabarit (36) étant préalablement monté sur le sous-ensemble (34) préassemblé pour remplacer au moins les éléments complémentaire de référence manquant au sous-ensemble (34) afin de permettre le positionnement correct du sous-ensemble (34) sur la station de traitement sans modifier les moyens (33) de positionnement de ladite station par rapport au mode d'utilisation "complet".

2. Procédé selon la revendication précédente, **caractérisé en ce que** le gabarit (36) est formé par un assemblage de composants fixés ensemble, tous les éléments complémentaires manquants étant remplacés par des composants (38) de forme extérieure identique.

3. Procédé selon l'une quelconque des revendications précédentes, **caractérisé en ce que** chaque gabarit (36) est réutilisé pour la fabrication de plusieurs sous-ensembles (34) identiques.

4. Gabarit (36) pour la mise en oeuvre du procédé selon l'une quelconque des revendications précédentes, **caractérisé en ce qu'**il comporte au moins un composant (38) qui est identique à un élément de tuyauterie dit "de série" utilisé pour fabriquer un ensemble de ligne d'échappement dans un mode d'utilisation "complet" de la station.

5. Gabarit (36) selon la revendication précédente, **caractérisé en ce qu'**il comporte au moins un composant dit "renforcé" qui présente une forme extérieure identique à l'élément correspondant utilisé sur l'ensemble (10) de ligne d'échappement, mais qui présente une structure interne plus rigide.

6. Gabarit (36) selon la revendication précédente, **caractérisé en ce qu'**un élément complémentaire de l'ensemble est formé par une conduite (26) tubulaire, cette conduite (26) tubulaire étant remplacée par un composant (38) formé par une conduite tubulaire de paroi plus épaisse dans le gabarit (36).

7. Gabarit (36) selon l'une quelconque des revendications précédentes, **caractérisé en ce qu'**il est destiné à être fixé par emboîtement axial d'une extrémité (40) de raccordement du gabarit (36) avec un conduit d'extrémité du sous-ensemble (34).

8. Gabarit (36) selon la revendication précédente, **caractérisé en ce que** le gabarit (36) est équipé d'un tenon (44) qui est agencé à son extrémité (40) axiale de raccordement, le tenon (44) étant destiné à être emboîté de manière démontable avec un ajustement serré dans le conduit d'extrémité du sous-ensemble (34).

9. Gabarit (36) selon la revendication précédente, **caractérisé en ce que** le tenon (44) comporte une partie (46) de fixation avec l'extrémité (40) de raccordement du gabarit (36).

10. Gabarit (36) selon la revendication précédente, **caractérisé en ce que** la partie (46) de fixation est formée par un manchon dans lequel l'extrémité (40) de raccordement du gabarit (36) est insérée et fixée.

11. Gabarit (36) selon la revendication 9, **caractérisé en ce que** la partie (46) de fixation est formée par une cheville qui est emmanchée à force dans un orifice axial de l'extrémité (40) de raccordement du gabarit (36).

12. Station de fabrication d'au moins un sous-ensemble (34) d'éléments d'une ligne d'échappement de véhicule automobile **caractérisée en ce qu'**elle comprend des outils pour fabriquer ladite ligne d'échappement et au moins un gabarit selon l'une des revendications 4 à 11.

## Patentansprüche

1. Individuelles Fertigungsverfahren einer Teileinheit (34) von Elementen einer Abgasanlage eines Kraftfahrzeugs in einer Fertigungsstation, wobei die Teileinheit (34) dazu bestimmt ist, an andere Elemente angeschlossen zu werden, um eine Einheit (10) der Abgasanlage zu bilden, wobei mindestens ein komplementäres Element der Einheit (10) nicht Teil der Teileinheit (34) ist,
in einer ersten so genannten "kompletten" Betriebsart der Fertigungsstation werden alle Elemente der Einheit (10) vormontiert an die Fertigungsstation geliefert, wobei mindestens ein komplementäres Element, Bezugselement genannt, einen geometrischen Bezug bildet, der es Einrichtungen (33) zur Positionierung der Station ermöglicht, die Einheit (10) bezüglich von Werkzeugen der Station zu positionieren,
in einer zweiten so genannten "partiellen" Betriebsart der Fertigungsstation wird nur die Teileinheit (34) vormontiert an die Fertigungsstation geliefert,
**dadurch gekennzeichnet, dass** mindestens eine Schablone (36) vorher auf die vormontierte Teileinheit (34) montiert wird, um mindestens die komplementären Bezugselemente zu ersetzen, die der Teileinheit (34) fehlen, um die korrekte Positionierung der Teileinheit (34) in der Verarbeitungsstation zu ermöglichen, ohne die Einrichtungen (33) zur Positionierung der Station bezüglich der "kompletten" Betriebsart zu verändern.

2. Verfahren nach dem vorhergehenden Anspruch, **dadurch gekennzeichnet, dass** die Schablone (36) durch einen Zusammenbau von aneinander befestigten Bauteilen geformt wird, wobei alle fehlenden komplementären Elemente durch Bauteile (38) gleicher Außenform ersetzt werden.

3. Verfahren nach einem der vorhergehenden Ansprüche, **dadurch gekennzeichnet, dass** jede Schablone (36) für die Fertigung mehrerer gleicher Teileinheiten (34) wiederverwendet wird.

4. Schablone (36) zur Durchführung des Verfahrens nach einem der vorhergehenden Ansprüche, **dadurch gekennzeichnet, dass** sie mindestens ein Bauteil (38) aufweist, das gleich einem so genannten "Serien"-Rohrsystemelement ist, das verwendet wird, um eine Einheit einer Abgasanlage in einer "kompletten" Betriebsart der Station zu fertigen.

5. Schablone (36) nach dem vorhergehenden Anspruch, **dadurch gekennzeichnet, dass** sie mindestens ein so genanntes "verstärktes" Bauteil aufweist, das eine Außenform gleich dem entsprechenden Element aufweist, das bei der Einheit (10) der Abgasanlage verwendet wird, das aber eine steifere Innenstruktur aufweist.

6. Schablone (36) nach dem vorhergehenden Anspruch, **dadurch gekennzeichnet, dass** ein komplementäres Element der Einheit von einer Rohrleitung (26) gebildet wird, wobei diese Rohrleitung (26) durch ein Bauteil (38) ersetzt wird, das von einer Rohrleitung mit dickerer Wand in der Schablone (36) geformt wird.

7. Schablone (36) nach einem der vorhergehenden Ansprüche, **dadurch gekennzeichnet, dass** sie dazu bestimmt ist, durch axiales Ineinanderstecken eines Anschlussendes (40) der Schablone (36) mit einem Endkanal der Teileinheit (34) befestigt zu werden.

8. Schablone (36) nach dem vorhergehenden Anspruch, **dadurch gekennzeichnet, dass** die Schablone (36) mit einem Zapfen (44) ausgestattet ist, der an ihrem axialen Anschlussende (40) angeordnet ist, wobei der Zapfen (44) dazu bestimmt ist, ausbaubar mit einer engen Einpassung in den Endkanal der Teileinheit (34) eingesteckt zu werden.

9. Schablone (36) nach dem vorhergehenden Anspruch, **dadurch gekennzeichnet, dass** der Zapfen (44) einen Befestigungsteil (46) mit dem Anschlussende (40) der Schablone (36) aufweist.

10. Schablone (36) nach dem vorhergehenden Anspruch, **dadurch gekennzeichnet, dass** der Befestigungsteil (46) von einer Muffe geformt wird, in die das Anschlussende (40) der Schablone (36) eingefügt und befestigt wird.

11. Schablone (36) nach Anspruch 9, **dadurch gekennzeichnet, dass** der Befestigungsteil (46) von einem Dübel geformt wird, der unter Krafteinwirkung in eine axiale Öffnung des Anschlussendes (40) der Schablone (36) eingeschoben wird.

12. Fertigungsstation mindestens einer Teileinheit (34) von Elementen einer Abgasanlage eines Kraftfahrzeugs, **dadurch gekennzeichnet, dass** sie Werkzeuge zur Fertigung der Abgasanlage und mindestens eine Schablone nach einem der Ansprüche 4 bis 11 enthält.

## Claims

1. Method for individually manufacturing a subassembly (34) of motor vehicle exhaust line elements on a production work station, the subassembly (34) being intended to be connected to other elements to form an exhaust line assembly (10), at least one complementary element of the assembly (10) not forming part of the said subassembly (34),
in a first mode of use of the manufacturing work station, referred to as "complete", all the elements of the assembly (10) are delivered to the manufacturing work station preassembled, at least one complementary element, referred to as reference element, forming a geometric reference to allow positioning means (33) belonging to the work station to position the assembly (10) with respect to tools of the work station,
in a second mode of use of the manufacturing work station referred to as "partial", only the subassembly (34) is delivered to the manufacturing work station, preassembled, **characterized in that** at least one jig (36) is premounted on the preassembled subassembly (34) to replace at least the complementary reference elements missing from the subassembly (34) so that the subassembly (34) can be correctly positioned on the processing work station without modifying the positioning means (33) of the said work station by comparison with the "complete" mode of use.

2. Method according to the preceding claim, **characterized in that** the jig (36) is formed by an assembly of components fixed together, all the missing complementary elements being replaced by components (38) of identical exterior shape.

3. Method according to either one of the preceding claims, **characterized in that** each jig (36) is reused for the manufacture of several identical subassemblies (34).

4. Jig (36) for implementing the method according to any one of the preceding claims, **characterized in that** it comprises at least one component (38) which is identical to a "series-production" pipework element used to manufacture an exhaust line assembly in a "complete" mode of use of the work station.

5. Jig (36) according to the preceding claim, **characterized in that** it comprises at least one so-called "reinforced" component which has an exterior shape identical to the corresponding element used on the exhaust line assembly (10) but which has a more rigid internal structure.

6. Jig (36) according to the preceding claim, **characterized in that** a complementary element of the assembly is formed by a tubular pipe (26), this tubular pipe (26) being replaced by a component (38) formed by a tubular pipe with greater wall thickness in the jig (36).

7. Jig (36) according to any one of the preceding claims, **characterized in that** it is intended to be fixed by axial insertion of a connection end (40) of the jig (36) into an end pipe of the subassembly (34) .

8. Jig (36) according to the preceding claim, **characterized in that** the jig (36) is equipped with a tenon (44) which is arranged at its axial connection end (40), the tenon (44) being intended to be plugged removably in with a snug fit into the end pipe of the subassembly (34).

9. Jig (36) according to the preceding claim, **characterized in that** the tenon (44) comprises a part (46) for fixing to the connection end (40) of the jig (36).

10. Jig (36) according to the preceding claim, **characterized in that** the fixing part (46) is formed by a sleeve into which the connection end (40) of the jig (36) is inserted and secured.

11. Jig (36) according to Claim 9, **characterized in that** the fixing part (46) is formed by a peg which is driven forcibly into an axial orifice at the connection end (40) of the jig (36).

12. Work station for manufacturing at least one subassembly (34) of motor vehicle exhaust line elements, **characterized in that** it comprises tools for manufacturing the said exhaust line and at least one jig according to one of Claims 4 to 11.
